# EUROPÄISCHE PATENTSCHRIFT

(11) **EP 1 945 540 B1**
(45) Veröffentlichungstag und Bekanntmachung des Hinweises auf die Patenterteilung: **08.07.2009**
(21) Anmeldenummer: 07787936.9
(22) Anmeldetag: 26.07.2007
(51) Int. Cl.: B65G 21/20, B62D 55/30

(54) **UMLAUFEINRICHTUNG FÜR EINE TRANSPORTKETTE ODER EIN TRANSPORTBAND**
REVOLVING DEVICE FOR A CONVEYOR CHAIN OR A CONVEYOR BELT
AGENCEMENT DE ROTATION POUR UNE CHAÎNE DE TRANSPORT OU UNE BANDE DE TRANSPORT

(30) Priorität: 03.08.2006 DE 102006036328
(43) Veröffentlichungstag der Anmeldung: 23.07.2008
(73) Patentinhaber: SIEMENS AKTIENGESELLSCHAFT, 80333 München (DE)
(72) Erfinder: STOIBER, Dietmar, 90763 Fürth (DE)
(86) Internationale Anmeldenummer: PCT/EP2007/057712
(87) Internationale Veröffentlichungsnummer: WO 2008/015154

(56) Entgegenhaltungen:
- EP-A- 1 378 320
- DE-A1- 10 323 910
- DE-B4-4102004 023 49
- US-A- 5 027 942

## Beschreibung

Die Erfindung betrifft eine Umlaufeinrichtung für eine Transportkette oder ein Transportband, welche beispielsweise in Zusammenhang mit Produktionsmaschinen eingesetzt werden, um ein Arbeitsteil entlang einer Fertigungsstraße zu transportieren.

Derartige Einrichtungen sind in vielen Fällen in mindestens zwei Teilstücke aufgeteilt, so dass eine Vorspannung zwischen den Teilstücken beispielsweise dadurch erreicht werden kann, indem eine Feder die beiden Teilstücke auseinander drückt und dadurch die Transportkette mechanisch vorspannt. Diese Vorspannung ist notwendig, da eine derartige Einrichtung besonders bei hohen Transportgeschwindigkeiten einem großen Verschleiß unterliegt. Die Kettenglieder neigen dabei während ihres Umlaufs zu teilweise sehr starken Schwingungen, und dadurch ist ein einwandfreies Abwälzen der Lauf- und/oder Führungsrollen der Transportkette in den dafür vorgesehenen Führungsprofilen nicht mehr gewährleistet und dadurch der Verschleiß erhöht. Die eingangs erwähnte Vorspannung der beiden Teilstücke wirkt durch eine Vorspannung der Transportkette etwaig auftretenden Schwingungen entgegen, jedoch kann eine zu große Vorspannung den Verschleiß sogar erhöhen.

In der DE 103 23 910 A1 wird eine magnetische Kettenführung für Transportketten vorgeschlagen, bei der Magneten zur Erzeugung eines magnetischen Feldes vorgesehen sind, um eine magnetische Kraft auf die Kette auszuüben und diese dadurch in Richtung der Führungsschiene anzuziehen. Dadurch können unerwünschte Schwingungen der Transportkette wirksam gedämpft werden, so dass unter Umständen sogar eine Vorspannung der Kette entfallen und die Umlaufeinrichtung dadurch einstückig ausgeführt werden kann.

In der Patentschrift DE 10 2004 023 494 B4 ist eine Kettenführung für eine endlos umlaufende Transportkette offenbart. Dabei weisen die Kettenglieder Laufrollen und Führungsrollen auf, wobei die Laufrollen auf Laufbahnen abwälzen und die Führungsrollen in einem Nutprofil geführt werden. Die Führungsrollen sind dabei mittels eines Achsbolzens gelagert, welcher durch die Führungsrollen hindurchragt. Um Schwingungen der Kette zu dämpfen, sind am Grund des Nutprofils Magneten vorgesehen, welche auf den Achsbolzen einwirken und dadurch die Kettenglieder in Richtung des Grunds des Nutprofils anziehen. Bei der vorgeschlagenen Einrichtung findet der Schluss des magnetischen Kreises über einen Luftspalt hinweg über den Achsbolzen statt, wobei der Achsbolzen auch den Feldrückfluss zurück zu den Magneten führt.

Der Erfindung liegt nun die Aufgabe zugrunde, eine Umlaufeinrichtung für eine Transportkette oder ein Transportband anzugeben, welche den genannten Stand der Technik weiterbildet und insbesondere die magnetische Kraftausübung auf die Transportkette bzw. das Transportband optimiert.

Die Aufgabe wird erfindungsgemäß gelöst durch eine Umlaufeinrichtung für eine Transportkette oder ein Transportband, umfassend:
- mindestens einen Magneten zur Ausübung einer magnetischen Kraft auf die Transportkette oder das Transportband,
- mindestens ein erstes und ein zweites Flussleitstück zur Konzentration eines durch den Magneten hervorgerufenen Magnetflusses, wobei das erste Flussleitstück den Magnetfluss derart konzentriert, dass der Magnetfluss im Wesentlichen senkrecht zu und durch eine magnetisch anziehbare oder abstoßbare Wirkfläche einer Komponente der Transportkette oder des Transportbands verläuft, und das zweite Flussleitstück derart angeordnet ist, dass ein magnetischer Rückfluss von der Komponente zum Magneten im Wesentlichen nicht durch die Komponente erfolgt, sondern über eine weitere Komponente der Transportkette oder des Transportbands und das zweite Flussleitstück.

Die Erfindung geht dabei von der Überlegung aus, dass die Vermeidung eines magnetischen Rückflusses über die Komponente, in welche auch der Hinfluss eingespeist wird, zu einer wirksamen Unterdrückung eines Streufelds zwischen den magnetischen Polen führt. Dadurch wird vermieden, dass die Komponente in zwei magnetische Wirkflächen aufgeteilt werden muss, nämlich in eine für den Hinfluss und eine für den Rückfluss. Eine solche Aufteilung hätte zur Folge, dass die magnetisch genutzte Wirkfläche nur einen Teil der zur Verfügung stehenden Wirkfläche betragen würde. In der Praxis kommen häufig eher kleine zur Verfügung stehende Wirkflächen vor, wie beispielsweise die Stirnflächen der freien Enden von Achsbolzen, welche insbesondere Führungsrollen tragen. Insbesondere bei derartigen kleinen Wirkflächen ist die Führung des Rückflusses über eine andere Komponente sehr vorteilhaft.

Erfindungsgemäß wird folglich ein magnetischer Kreis ausgebildet, welcher beispielsweise die Stirnfläche einer Komponente, z.B. eines Bolzens, für den magnetischen Anzug nutzt, wobei der magnetische Fluss unipolar in einer Flussrichtung in die Komponente eingespeist wird, im Wesentlichen senkrecht zu einer Wirkfläche der Komponente wie beispielsweise einer Stirnfläche. Der Rückfluss, also das Schließen des magnetischen Kreises, erfolgt dabei nicht über die Komponente, sondern über eine weitere Komponente der Einrichtung, beispielsweise über die Kettenglieder, welche als Kettenwägen ausgebildet sein können, und/oder über die Laufrollen. Zur gewünschten Führung des Magnetfelds sind das erste und das zweite Flussleitstück vorgesehen. Die Flussleitstücke weisen insbesondere einen ummagnetisierbaren Eisenwerkstoff auf. So kann das vom Magneten erzeugte magnetische Feld durch die Flussleitstücke geleitet und insbesondere konzentriert werden, um eine große magnetische Kraft auf die Komponente der Umlenkeinrichtung auszuüben. Dadurch, dass das magnetische Feld senkrecht zur Wirkfläche der Komponente und mit großer Stärke in die Komponente eingeleitet wird, ist im Zusammenspiel mit dem zweiten Flussleitstück die Ausbildung eines magnetischen Kreises möglich, bei welchem Streuflüsse vermieden und der magnetische Rückfluss nicht über die Komponente geführt wird.

Einen optimierten Anordnungsort insbesondere für das zweite Flussleitstück, welches den Rückfluss des magnetischen Feldes zum Magneten mitgestalten soll, kann der Fachmann beispielsweise durch eine räumliche Magnetfeldmessung auffinden, wenn er dabei schrittweise die Anordnung der Flussleitstücke so verändert, bis er einen magnetischen Rückfluss praktisch vollständig außerhalb des Ortes der Komponente feststellt. Es ist auch möglich, die konstruktive Auslegung der Umlaufeinrichtung einzubeziehen und dabei für den Rückfluss vorhandene Komponenten der Einrichtung auszunutzen, wie beispielsweise die bereits genannten Kettenglieder, Führungsrollen oder Laufrollen. Darüber hinaus kann eine Einrichtung auch Seitenwände, beispielsweise Seitenführungsprofile zur Führung von Führungsrollen, umfassen. Derartige Seitenwände, die auf ihrer Oberseite auch als Laufbahnen für Laufrollen benutzt werden können, kommen ebenfalls als weitere Komponente zur Führung des Rückflusses in Betracht.

Eine erfindungsgemäße Umlaufeinrichtung ist besonders vorteilhaft bei Produktionsmaschinen und Werkzeugmaschinen einsetzbar. Ein Sensor sorgt dabei vorteilhaft für die frühzeitige Erkennung eines Verschleißes, beispielsweise durch Messung des magnetischen Feldes, welches sich bei Verschleiß und damit bei Veränderung der Anordnungsgeometrie verändert.

Vorteilhaft ist die erfindungsgemäße Umlenkeinrichtung bei einer Produktions- oder Werkzeugmaschine mittels eines elektrischen Antriebs angetrieben, welcher seinerseits über einen Stromrichter angesteuert wird. Im Zusammenspiel mit einem Sensor zur Verschleißerkennung kann der Stromrichter den Antrieb der erfindungsgemäßen Umlenkeinrichtung so steuern, dass beispielsweise in Abhängigkeit vom aktuell detektierten Verschleiß der Einrichtung das magnetische Feld, welches auf die Einrichtung einwirkt, beeinflusst wird, um einen verbesserten Lauf der Einrichtung zu erzielen. Dabei können zur Erzeugung des magnetischen Felds Elektromagneten vorgesehen sein, welche durch den Stromrichter abhängig vom Signal des Verschleißsensors angesteuert werden, um ein variables, dem aktuellen Verschleißzustand angepasstes Magnetfeld zu erzeugen.

Vorteilhaft ist die Wirkfläche, auf welche die Magnetkraft einwirkt, eine Fläche einer Führungsrolle oder Laufrolle der Umlenkeinrichtung.

Führungsrollen und Laufrollen sind bei Ketten- oder Bandumlaufeinrichtungen praktisch immer vorhanden und können daher separat oder gemeinsam als Wirkfläche genutzt werden.

Die Führungsrolle ist vorteilhaft mittels eines Bolzens an der Transportkette oder an dem Transportband gehaltert, und die Wirkfläche ist ein freies Ende des Bolzens.

Alternativ oder in Ergänzung zur direkten Einwirkung der Magnetkraft auf die Führungsrolle wird hierbei ein Bauteil benutzt, nämlich der Bolzen, welcher zur Halterung der Führungsrolle vorgesehen ist. Der Bolzen weist dabei im Vergleich zur Führungsrolle selbst eine größere und damit günstigere Wirkfläche auf, bevorzugt ein freies Stirnende des Bolzens, welches als ebene Kreisfläche ausgebildet sein kann.

In einer besonders vorteilhaften Ausgestaltung der Erfindung sind unterhalb der Transportkette oder des Transportbands mindestens zwei Magneten vorgesehen, wobei das erste Flussleitstück zwischen den mindestens zwei Magneten angeordnet ist. Weiterhin sind dabei mindestens zwei wiederum unterhalb der Transportkette oder des Transportbands angeordnete zweite Flussleitstücke vorgesehen, so dass sich in Art eines Sandwichs folgende Anordnungsabfolge dieser magnetisch wirksamen Komponenten ergibt:
Zweites Flussleitstück - Magnet - erstes Flussleitstück - Magnet - zweites Flussleitstück.

Dadurch ist die Ausbildung eines symmetrischen magnetischen Kreises möglich. Die weitere Komponente, über welche der Rückfluss geführt wird, umfasst beispielsweise Seitenwände der Einrichtung, welche wegen der symmetrischen Auslegung des magnetischen Kreises eine gleiche magnetische Polung erhalten, so dass sich kein unerwünschter Streufluss einstellt.

Die mindestens zwei Magneten sind bevorzugt auf gleicher Höhe angeordnet und erzeugen ein jeweils entgegen gerichtetes Magnetfeld.

Dabei liegen sich beispielsweise die Nordpole der Magnete gegenüber und speisen ein magnetisches Feld in das erste Flussleitstück ein. Die Ausbildung des magnetischen Kreises wird dabei besonders gut symmetrisch.

Bei einer weiteren bevorzugten Ausführungsform ragt das erste Flussleitstück, welches zwischen den zwei Magneten angeordnet ist, über die Magneten höhenmäßig hinaus, so dass ein erster Luftspalt zwischen dem ersten Flussleitstück und der Komponente kleiner ist als ein zweiter Luftspalt zwischen den Magneten und der Komponente.

Das erste Flussleitstück befindet sich dabei relativ zu der Magnetfeldsymmetrie an einer zentralen Position und wirkt dabei als magnetischer Gegenpol für die weitere Komponente, über welche der magnetische Rückfluss symmetrisch zurückgeführt wird. Der kleine Luftspalt zwischen dem ersten Flussleitstück und der Komponente führt dabei praktisch im Hinfluss das gesamte von den Magneten erzeugte Feld, so dass Streuflüsse wirksam vermieden sind.

In einer weiteren besonders bevorzugten Ausführungsform wird die Erfindung auf eine Kettenführung für eine endlos umlaufende Transportkette für eine Maschine zum Bearbeiten von plattenförmigen Werkstücken angewendet. Eine derartige Umlaufeinrichtung umfasst an Kettengliedern angeordnete Laufrollen und Führungsrollen, wenigstens eine an einem Maschinengestell der Maschine entlang zumindest eines Abschnitts der Transportkette angeordnete Führungsschiene, die zwei voneinander beabstandete Laufbahnen für die Laufrollen der Kettenglieder und dazwischen ein Notprofil aufweist, in welches die Führungsrollen der Kettenglieder eintauchen, die auf an den Kettengliedern vorstehenden durch die Führungsrollen hindurchragenden Bolzen gelagert sind, wobei die Transportkette über Kettenräder umgelenkt wird, von denen mindestens eines als Antriebskettenrad ausgebildet ist. Die mindestens zwei Magnete, das erste Flussleitstück und die mindestens zwei zweiten Flussleitstücke sind am Grund des Nutprofils der Führungsschiene angeordnet. Dabei ist das erste Flussleitstück zwischen den mindestens zwei Magneten angeordnet, so dass sich am Grund des Nutprofils in horizontaler Richtung eine Sandwich-Anordnung wie folgt ergibt: Zweites Flussleitstück - Magnet - erstes Flussleitstück - Magnet - zweites Flussleitstück.

Die mindestens zwei Magneten sind auf gleicher Höhe angeordnet und erzeugen ein jeweils entgegen gerichtetes Magnetfeld. Die Komponente, in welche die Einspeisung des magnetischen Flusses stattfindet, ist der Bolzen, wobei die Wirkfläche ein freies Ende des Bolzens ist. Dieses freie Ende ragt in das Nutprofil hinein.

Der magnetische Rückfluss wird über eine weitere Komponente geführt, welche die Kettenglieder, die Laufrollen und eine Seitenwand des Nutprofils umfasst.

Bei dieser Ausgestaltung wird das Magnetfeld unipolar in den Bolzen der Führungsrolle mittels eines symmetrischen magnetischen Kreises eingespeist. Der magnetische Kreis ist dabei zu einer Mittelebene symmetrisch, welche sich parallel zur Umlaufrichtung der Transportkette erstreckt und welche in der Mitte der Kettenglieder liegt, welche als Kettenwägen ausgebildet sind. Das Nutprofil weist symmetrisch bezüglich der Mittelebene Seitenwände auf, über welche der magnetische Rückfluss letztendlich zu den zweiten Flussleitstücken und von dort zurück zu den Magneten geführt wird. Diese Seitenwände werden magnetisch gleich gepolt, was einen unerwünschten Streufluss verhindert. Das erste Flussleitstück bildet den magnetischen Gegenpol zu den Seitenwänden, wobei das erste Flussleitstück zentral in der Mitte zwischen den Seitenwänden des Nutprofils angeordnet ist und einen kleinen Luftspalt zur freien Stirnfläche des Bolzens ausbildet. Das erste Flussleitstück hat dabei bevorzug eine möglichst kleine Oberfläche, um nur einen geringen Leitwert für einen störenden magnetischen Streufluss darzustellen und den Magnetfluss möglichst gut zu konzentrieren

In einer bevorzugten Ausführungsform sind die mindestens zwei Magneten, das erste Flussleitstück und die mindestens zwei zweiten Flussleitstücke in einem Einlaufbereich der Transportkette in mindestens ein Kettenrad, insbesondere in das Antriebsrad, angeordnet.

Am Kettenrad findet eine Richtungsumkehr der ein- bzw. auslaufenden Kette statt. Je größer die Geschwindigkeit ist, mit welcher die Kette ein- bzw. ausläuft, desto größer sind die dabei am Kettenrad auftretenden und auf die Kette einwirkenden Fliehkräfte. Die Fliehkräfte verursachen ein unerwünschtes Schwingen und Vibrieren der Kette. Die erfindungsgemäße Anordnung der Magneten, des ersten und der zweiten Flussleitstücke sorgt dabei für ein wirksames Dämpfen dieser Schwingungen im besonders kritischen Bereich des Ketteneinlaufs.

Alternativ oder in Ergänzung können die Magneten, das erste und die zweiten Flussleitstücke auch in einem Auslaufbereich der Kette aus dem Kettenrad angeordnet sein, um ebenfalls unerwünschte Schwingungen infolge der auftretenden Fliehkräfte zu dämpfen.

Des Weitern können die Magneten, das erste und die zweiten Flussleitstücke in einem Bereich des Umlaufs der Transportkette angeordnet sein, welcher geradlinig verläuft. Auch in derartig geradlinig verlaufenden Teilen des Umlaufwegs neigt die Kette insbesondere bei hohen Transportgeschwindigkeiten zu unerwünschten Schwingungen, was mittels dieser Ausführungsform bekämpft werden kann.

Im Folgenden werden zwei Ausführungsbeispiele der Erfindung näher dargestellt.

Es zeigen:
- FIG 1: eine erfindungsgemäße Umlaufeinrichtung für eine Transportkette, wobei die Kettenglieder als Kettenwägen ausgebildet sind und mittels eines Führungsrads in einem Nutprofil einer Führungsschiene geführt werden, und
- FIG 2: eine weitere Ausführungsform einer Umlaufeinrichtung, bei welcher der magnetische Kreis nur einen Magneten aufweist, und der magnetische Rückfluss sich über die Kettenglieder schließt.

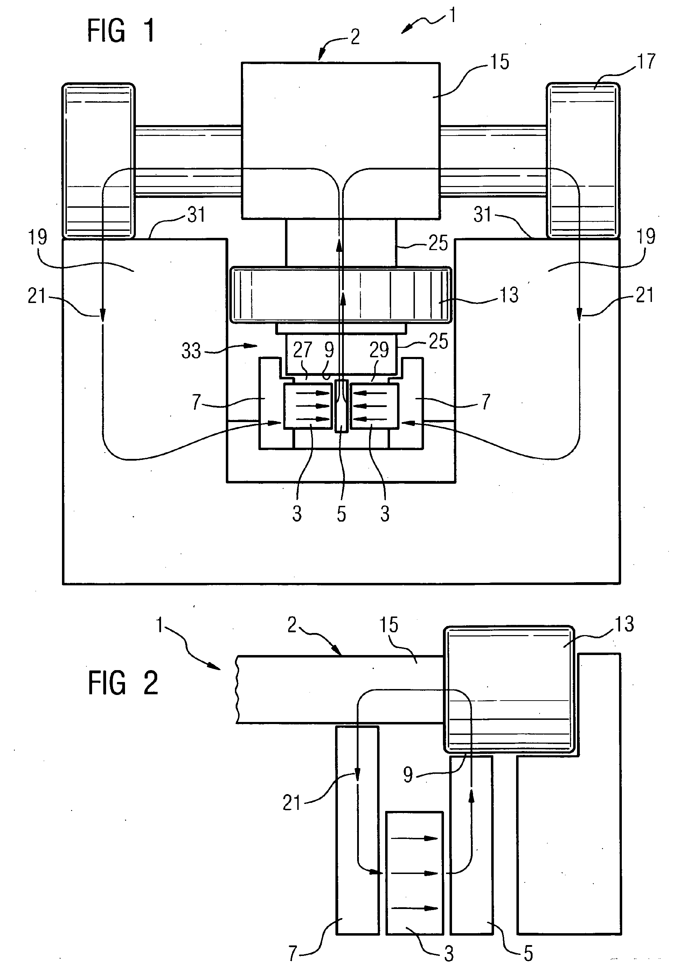

In Figur 1 ist eine erfindungsgemäße Umlaufeinrichtung für eine endlos umlaufende Transportkette dargestellt. Die Ansicht zeigt dabei einen Querschnitt durch eine Führungsschiene der Einrichtung, welche ein Nutprofil 33 sowie Seitenwände 19 aufweist, deren obere Flächen eine Laufbahn 31 für Laufrollen 17 der Transportkette 2 bilden.

Die Transportrichtung der Transportkette 2 weist bei der Figur 1 in die Zeichenebene hinein. Die Kettenglieder 15 der Transportkette 2 sind als Kettenwägen ausgebildet, an welchen mittels Bolzen 25 Führungsrollen 13 gehaltert sind. Die Bolzen ragen dabei durch die Führungsrollen 13 hindurch. Entlang des Transportwegs der Transportkette 2 wird diese mittels der Führungsrollen 13 im Nutprofil 33 der Führungsschiene geführt.

Zur Ausübung einer magnetischen Kraft auf die Transportkette zur Unterdrückung von unerwünschten Schwingungen sind am Grund des Nutprofils 33 mindestens zwei Magneten 3, ein zentrales erstes Flussleitstück 5, sowie mindestens zwei zweite Flussleitstücke 7 angeordnet. Die Anordnung der beschriebenen Elemente erfolgt in Art eines Sandwichs, wobei zwischen den zweiten Flussleitstücken 7 jeweils nach innen gerichtet die Magneten 3 folgen, und das erste Flussleitstück 5 im Zentrum des Sandwichs zwischen den Magneten 3 angeordnet ist. Die Magneten 3 weisen dabei mit gleichartigen Magnetpolen zum ersten Flussleitstück 5. Das erste Flussleitstück 5 ist im Vergleich zu den Magneten 3 schmaler ausgebildet und weist eine geringere Oberfläche auf. Mittels des ersten Flussleitstücks 3 wird der magnetische Fluss der Magneten 3 konzentriert und senkrecht auf eine Wirkfläche 9 des Bolzens 25 gerichtet. Die Wirkfläche 9 ist dabei ein freies Stirnende des Bolzens 25, welches aus der Führungsrolle 13 herausragt. Vom ersten Flussleitstück 5 tritt der magnetische Fluss über einen ersten Luftspalt 29 in die Wirkfläche 9 des Bolzens 25 ein. Dieser erste Luftspalt 29 ist kleiner als ein zweiter Luftspalt 27, welcher zwischen den Magneten 3 und der Wirkfläche 9 gebildet ist. Dadurch ergibt sich zwischen dem ersten Flussleitstück 5 und dem Bolzen 25 ein geringerer magnetischer Widerstand, so dass das mittels der Magneten 3 erzeugte Magnetfeld möglichst vollständig über das erste Flussleitstück 5 und den ersten Luftspalt 29 zum Bolzen 25 übertritt. Die zweiten Flussleitstücke 7 dienen der Leitung und Konzentration eines Magnetrückflusses 21, welche sich bei der vorliegenden Ausführungsform über die Kettenglieder 15, die Laufrollen 17 und die Seitenwände 19 ergibt. Je stärker das von den Magneten 3 erzeugte Magnetfeld ist und je genauer die Senkrechte zur Wirkfläche 9 eingehalten wird, desto besser und vollständiger kann der Magnetrückfluss 21 über die Kettenglieder 15, die Laufrollen 17 und die Seitenwände 19 erfolgen, ohne dass sich ein Magnetrückfluss über die Wirkfläche 9 des Bolzens ergibt. Dadurch sind die mittels der erfindungsgemäßen Anordnung erzeugbaren Magnetkräfte auf die Transportkette optimiert.

Der magnetische Fluss zur Anziehung der Kettenwägen wird folglich symmetrisch von mindestens zwei Magneten erzeugt, welche als Dauermagneten ausgebildet sein können. Es kann eine magnetische Einheit umfassend die Magneten 3, das erste Flussleitstück 5 sowie die zweiten Flussleitstücke 7 gebildet sein. Derartige magnetische Einheiten können dann entlang des Transportwegs der Transportkette 2 aneinandergereiht werden, um in gewünschten Bereichen über eine gewünschte Länge des Transportwegs eine magnetische Anziehung der Transportkette zu erreichen. Eine Aneinanderreihung derartiger Einheiten zur Verlängerung der Strecke, entlang derer eine magnetische Anziehung auf die Transportkette 2 stattfindet, ist auch deswegen sinnvoll, da im Falle der Verwendung von Dauermagneten diese ab einer bestimmten Magnetpollänge einer Bruchgefahr ausgesetzt sind. Zur sicheren Vermeidung einer derartigen Bruchgefahr können beispielsweise magnetische Einheiten gewählt werden, bei welchen die Magnetpollängen der Magneten ca. 6 cm nicht überschreiten.

Das erste Flussleitstück 5 sorgt für eine Verdichtung des Magnetfelds und damit für eine hohe magnetische Flussdichte. Ein hoher Wert ist dabei erwünscht, weil die magnetische Anziehungskraft im Quadrat zur magnetischen Flussdichte anwächst. Es ist auf eine erfindungsgemäße Polung der Magnete zu achten, so dass stets derselbe Pol der Magneten auf das erste Flussleitstück 5 weist.

Der magnetische Fluss, der über die Bolzen 25 eingeleitet wurde, wird über die Kettenglieder 15, die Laufrollen 17 und die Seitenwände 19 geleitet durch die zweiten Flussleitstücke 7, zu den Magneten 3 zurückgeführt. Die Flussdichte des Magnetrückflusses 21 ist dabei wegen der großen Wirkflächen der Rückführungskomponenten Kettenglieder 15, Laufrollen 17 und Seitenwände 19 im Vergleich zur Flussdichte des in den Bolzen 25 eingeleiteten magnetischen Feldes reduziert, so dass unbeabsichtigte Kraftwirkungen des Magnetrückflusses 21 gering ausfallen.

Die Sandwich-Anordnung der magnetischen Einheit kann beispielsweise dadurch hergestellt werden, indem die zweiten, außen liegenden Flussleitstücke 7 durch einen Spannbolzen quer miteinander verbunden werden. An diesem Spannbolzen kann dann das erste Flussleitstück 5 aufgefädelt werden.

Die Grundzüge des gezeigten erfindungsgemäßen Entwurfs umfassen die Nutzung der Stirnfläche eines freien Endes des Bolzens 25 als Wirkfläche 9. Der magnetische Rückfluss 21 wird zur Optimierung der Kraftausübung auf die Transportkette über andere Flächen, die im Wesentlichen nicht zum Bolzen 25 gehören, zurück zu den Magneten 3 geleitet. Der magnetische Kreis ist somit symmetrisch um die mittels des ersten Flussleitstücks 5 erzeugte Flussführung aufgebaut. Die Rückführung des magnetischen Rückflusses 21 findet teilweise in den Wirkflächen zwischen den zweiten, seitlich angeordneten, Flussleitstücken 7 und teilweise über die Struktur der Führungsschiene statt. Da die magnetische Flussdichte im Rückführzweig aufgrund der vergleichsweise großen Flächen der beteiligten Rückführkomponenten niedrig ist, ergibt sich eine nur geringe Kraftwirkung auf die im Rückführzweig beteiligten Flächen.

Im Falle der Reihenschaltung mehrerer magnetischer Einheiten sollten die ersten Flussleitstücke 5 am Anfang und am Ende der in Reihe geschalteten magnetischen Einheiten im Vergleich zu den angrenzenden Einheiten höhenmäßig abgesenkt werden, vorteilhaft in einem Radius zum Ende hin auslaufen. Dies führt zu einer Vergrößerung des ersten Luftspalts 29 im Anfangs- und Endbereich der in Reihe geschalteten magnetischen Einheiten. So kann eine Rastkraft reduziert werden, welche die Reihenschaltung von magnetischen Einheiten in ihrem Anfangs- und Endbereich auf die Kettenwägen ausübt.

Figur 2 zeigt ein weiteres Ausführungsbeispiel einer erfindungsgemäßen Umlaufeinrichtung 1.

Dabei wird nur ein Magnet 3, bevorzugt ein Dauermagnet, sowie ein erstes Flussleitstück 5 und ein zweites Flussleitstück 7 eingesetzt, um einen magnetischen Fluss in eine Wirkfläche 9 einer Führungsrolle 13 oder einer Laufrolle der Umlaufeinrichtung 1 einzuleiten. Der vom Magneten 3 hervorgerufene magnetische Fluss wird mittels des ersten Flussleitstücks 5 konzentriert und tritt über einen Luftspalt senkrecht durch die Wirkfläche 9 in die Führungsrolle 13 oder in die Laufrolle ein und wird von dort über die Kettenglieder 15 als magnetischer Rückfluss 21 mittels des zweiten Flussleitstücks 7 zurück zum Magneten 3 geführt. Auch hierbei kommt es darauf an, mittels der Flussleitstücke 5 und 7 den magnetischen Fluss so auszubilden, dass der Magnetrückfluss 21 zurück zum Magneten 3 nicht über die Wirkfläche 9, sondern über mindestens eine weitere Komponente der Einrichtung 1 verläuft. Im vorliegenden Ausführungsbeispiel werden dazu mindestens die Kettenglieder 15, welche bevorzugt als Kettenwägen ausgebildet sind, benutzt. Es wäre auch denkbar, den magnetischen Rückfluss von den Kettengliedern zu einer weiteren, auf der linken Seite befindlichen, aber nicht näher dargestellten Führungsrolle oder Laufrolle zu leiten, von dort in eine Seitenwand der Führungsschiene und von dort mittels des zweiten Flussleitstücks 7 zurück zum Magneten 3.

Zusammengefasst lässt sich die Erfindung wie folgt umschreiben:
Es wird eine Umlaufeinrichtung für eine Transportkette oder ein Transportband vorgeschlagen, bei welcher mindestens ein Magnet eine anziehende oder abstoßende Kraft auf die Transportkette bzw. das Transportband ausübt, um insbesondere den Verschleiß bei hohen Transportgeschwindigkeiten zu verringern und Schwingungen zu dämpfen. Der magnetische Fluss wird dabei mittels eines ersten Flussleitstücks so konzentriert, dass er senkrecht auf eine Wirkfläche einer Komponente der Transportkette bzw. des Transportbands einwirkt. Im Zusammenspiel mit einem zweiten Flussleitstück zur Rückführung des magnetischen Rückflusses über eine weitere Komponente der Transportkette bzw. des Transportbands wird erreicht, dass der magnetische Rückfluss nicht über die erstgenannte Komponente stattfindet, was zu einer optimierten Kraftausübung auf die Transportkette bzw. auf das Transportband führt.

## Patentansprüche

1. Umlaufeinrichtung (1) für eine Transportkette oder ein Transportband (2), umfassend:
mindestens einen Magneten (3) zur Ausübung einer magnetischen Kraft auf die Transportkette oder das Transportband (2), **gekennzeichnet durch**
mindestens ein erstes (5) und ein zweites Flussleitstück (7) zur Konzentration eines **durch** den Magneten hervorgerufenen Magnetflusses, wobei
das erste Flussleitstück (5) den Magnetfluss derart konzentriert, dass der Magnetfluss im Wesentlichen senkrecht zu und **durch** eine magnetisch anziehbare oder abstoßbare Wirkfläche (9) einer Komponente (15) der Transportkette oder des Transportbands (2) verläuft, und
das zweite Flussleitstück (7) derart angeordnet ist, dass ein magnetischer Rückfluss (21) von der Komponente (11, 25) zum Magneten (3) im Wesentlichen nicht **durch** die Komponente (11) erfolgt, sondern über eine weitere Komponente (15, 17, 19) der Transportkette oder des Transportbands (2) und das zweite Flussleitstück (7).

2. Umlaufeinrichtung (1) nach Anspruch 1, wobei
die Wirkfläche (9) eine Fläche einer Führungsrolle (13) oder einer Laufrolle der Umlenkeinrichtung (1) ist.

3. Umlaufeinrichtung (1) nach Anspruch 1, wobei
eine Führungsrolle (13) der Umlaufeinrichtung (1) mittels eines Bolzens (25) an der Transportkette oder an dem Transportband (2) gehaltert ist, und
die Wirkfläche (9) ein freies Ende des Bolzens (25) ist.

4. Umlaufeinrichtung (1) nach einem der Ansprüche 1 bis wobei
mindestens zwei unterhalb der Transportkette oder des Transportbands (2) angeordnete Magneten (3) vorgesehen sind,
das erste Flussleitstück (5) zwischen den mindestens zwei Magneten (3) angeordnet ist, und
mindestens zwei unterhalb der Transportkette oder des Transportbands angeordnete zweite Flussleitstücke (7) vorgesehen sind, so dass sich folgende Anordnungsabfolge ergibt: zweites Flussleitstück (7) - Magnet (3) - erstes Flussleitstück (5) - Magnet (3) - zweites Flussleitstück (7).

5. Umlaufeinrichtung (1) nach Anspruch 4, wobei die mindestens zwei Magneten (3) auf gleicher Höhe angeordnet sind und ein jeweils entgegen gerichtetes Magnetfeld erzeugen.

6. Umlaufeinrichtung (1) nach Anspruch 5, wobei das zwischen den zwei Magneten (3) angeordnete erste Flussleitstück (5) über die Magneten (3) höhenmäßig hinausragt, so dass ein erster Luftspalt (29) zwischen dem ersten Flussleitstück und der Komponente kleiner ist als ein zweiter Luftspalt (27) zwischen den Magneten (3) und der Komponente (11, 25).

7. Umlaufeinrichtung (1) nach Anspruch 1, wobei die Umlaufeinrichtung (1) eine Kettenführung für eine endlos umlaufende Transportkette an einer Maschine zum Bearbeiten von plattenförmigen Werkstücken im Durchlauf ist, umfassend:
an Kettengliedern (15) angeordnete Laufrollen (17) und Führungsrollen (13),
wenigstens eine an einem Maschinengestell der Maschine entlang zumindest eines Abschnitts des Umlaufwegs der Transportkette angeordnete Führungsschiene, die zwei voneinander beabstandete Laufbahnen (31) für die Laufrollen (17) der Kettenglieder (15) und dazwischen ein Nutprofil (33) aufweist, in welches die Führungsrollen (13) der Kettenglieder (15) eintauchen, die auf an den Kettengliedern (15) vorstehenden, durch die Führungsrollen hindurchragenden Bolzen (25) gelagert sind, wobei die Transportkette über Kettenräder umgelenkt wird, von denen mindestens eines als Antriebskettenrad ausgebildet ist, wobei
mindestens zwei Magnete (3) am Grund des Nutprofils (33) der Führungsschiene angeordnet sind,
das erste Flussleitstück (5) zwischen den zwei Magneten (3) und am Grund des Nutprofils (33) der Führungsschiene angeordnet ist,
mindestens zwei zweite Flussleitstücke (7) vorgesehen und am Grund des Nutprofils (33) der Führungsschiene angeordnet sind, so dass sich folgende Anordnungsabfolge am Grund des Nutprofils (33) ergibt: zweites Flussleitstück (7) - Magnet (3) - erstes Flussleitstück (5) - Magnet (3) - zweites Flussleitstück (7),
die mindestens zwei Magneten (3) auf gleicher Höhe angeordnet sind und ein jeweils entgegen gerichtetes Magnetfeld erzeugen,
die Komponente der Bolzen (25) ist,
die Wirkfläche (9) ein freies Ende des Bolzens (25) ist, und
die weitere Komponente die Kettenglieder (15), die Laufrollen (17) und eine Seitenwand (19) des Nutprofils (33) umfasst.

8. Umlaufeinrichtung (1) nach Anspruch 7, wobei die mindestens zwei Magneten (3), das erste Flussleitstück (5) und die mindestens zwei zweiten Flussleitstücke (7) in einem Einlaufbereich der Transportkette in mindestens ein Kettenrad, insbesondere in das Antriebsrad, angeordnet sind.

9. Umlaufeinrichtung (1) nach Anspruch 7 oder 8, wobei die mindestens zwei Magneten (3), das erste Flussleitstück (5) und die mindestens zwei zweiten Flussleitstücke (7) in einem Auslaufbereich der Transportkette aus mindestens einem Kettenrad, insbesondere aus dem Antriebsrad, angeordnet sind.

10. Umlaufeinrichtung (1) nach einem der Ansprüche 7 bis 9, wobei die mindestens zwei Magneten (3), das erste Flussleitstück (5) und die mindestens zwei zweiten Flussleitstücke (7) in einem weiteren Bereich des Umlaufwegs der Transportkette angeordnet sind, wobei der Umlaufweg in diesem weiteren Bereich im Wesentlichen geradlinig verläuft.

## Claims

1. Revolving device (1) for a conveyor chain or a conveyor belt (2), comprising:
at least one magnet (3) for exerting a magnetic force on the conveyor chain or the conveyor belt (2), **characterised by**
at least a first (5) and a second flux guide piece (7) for concentration of a magnetic flux generated by the magnet, with
the first flux guide piece (5) concentrating the magnetic flux such that the magnetic flux moves essentially vertically to and through an effective surface (9) of a component (15) of the conveyor chain or of the conveyor belt (2) able to be magnetically attracted or repelled, and
the second flux guide piece (7) being arranged such that a magnetic reflux (21) from the component (11, 25) to the magnet (3) essentially does not occur through the component (11) but via a further component (15, 17, 19) of the conveyor chain or of the conveyor belt (2) and the second flux guide piece (7).

2. Revolving device (1) according to claim 1, with
the effective surface (9) being a surface of a guide roller (13) or a conveyor roller of the revolving device (1).

3. Revolving device (1) according to claim 1, with
a guide roller (13) of the revolving device (1) being held by means of a bolt (25) onto the conveyor chain or onto the conveyor belt (2), and
the effective surface (9) being a free end of the bolt (25).

4. Revolving device (1) according to one of the claims 1 to 3, with
at least two magnets (3) arranged underneath the conveyor chain or the conveyor belt (2) being provided,
the first flux guide piece (5) being arranged between the at least two magnets (3), and
at least two second flux guide pieces (7) arranged below the conveyor chain or the conveyor belt being provided, so that the following arrangement sequence is produced: second flux guide piece (7) - magnet (3) - first flux guide piece (5) - magnet (3) - second flux guide piece (7).

5. Revolving device (1) according to claim 4, where the at least two magnets (3) are arranged at the same height and create an opposingly directed magnetic field in each case.

6. Revolving device (1) according to claim 5, with the first flux guide piece (5) arranged between the two magnets (3) projecting above the height of the magnets (3), so that a first air gap (29) between the first flux guide piece and the components is smaller than a second air gap (27) between the magnets (3) and the components (11, 25).

7. Revolving device (1) according to claim 1, with the revolving device (1) being a chain guide for an endlessly circulating conveyor chain at a machine for processing plate-type workpieces in a production line, comprising:
conveyor rollers (17) and guide rollers (13) arranged on chain elements (15),
at least one guide rail arranged on a machine frame of the machine along at least one section of the revolving path of the conveyor chain, which features two tracks (31) for the conveyor rollers (17) of the chain elements (15) separated from each other and between them a slot profile (33), into which the guide rollers (13) of the chain elements (15) penetrate, which are supported on bolts (25) protruding from the chain elements (15) passing through the guide rollers, with the conveyor chain being diverted over chain wheels of which at least one is embodied as a drive chain wheel, with
at least two magnets being arranged (3) on the base of the slot profile (33) of the guide rail,
the first flux guide piece (5) being arranged between the two magnets (3) and on the base of the slot profile (33) of the guide rail,
at least two second flux guide pieces (7) being provided and being arranged on the base of the slot profile (33) of the guide rail, so that the following arrangement sequence on the base of the slot profile (33) is produced: second flux guide piece (7) - magnet (3) - first flux guide piece (5) - magnet (3) - second flux guide piece (7),
the at least two magnets (3) being arranged at the same height and creating an opposingly directed magnetic field in each case,
the component being the bolt (25),
the effective surface (9) being a free end of the bolt (25), and
the further components comprising the chain elements (15), the conveyor rollers (17) and a side wall (19) of the slot profile (33).

8. Revolving device (1) according to claim 7, with the at least two magnets (3), the first flux guide piece (5) and the at least two second flux guide pieces (7) being arranged in an entry area of the conveyor chain in at least one chain wheel, especially in the drive wheel.

9. Revolving device (1) according to claim 7 or 8, with the at least two magnets (3), the first flux guide piece (5) and the at least two second flux guide pieces (7) being arranged in an exit area of the conveyor chain comprising at least one chain wheel, especially the drive wheel.

10. Revolving device (1) according to one of the claims 7 to 9, with the at least two magnets (3), the first flux guide piece (5) and the at least two second flux guide pieces (7) being arranged in a further area of the circulation path of the conveyor chain, with the circulation path running in essentially a straight line in this further area.

## Revendications

1. Agencement (1) de rotation pour une chaîne de transport ou pour une bande (2) de transport comprenant :
au moins un aimant (3) pour appliquer une force magnétique à la chaîne de transport ou à la bande (2) de transport,
**caractérisé par**
au moins une première (5) et une deuxième pièce (7) de guidage du flux pour concentrer un flux magnétique provoqué par l'aimant, dans lequel
la première pièce (5) de guidage du flux concentre le flux magnétique de sorte que le flux magnétique soit sensiblement perpendiculaire à une surface (9) active et pouvant être attirée ou repoussée magnétiquement d'un élément (15) de la chaîne de transport ou de la bande (2) de transport et la traverse, et
la deuxième pièce de guidage du flux est disposé de manière à ce qu'un flux (21) magnétique de retour, allant de l'élément (11, 25) à l'aimant (3), ne se produise sensiblement pas à travers l'élément (11) mais passe par un autre élément (15, 17, 19) de la chaîne de transport ou de la bande (2) de transport et par la deuxième pièce (7) de guidage du flux.

2. Agencement (1) de rotation suivant la revendication 1, dans lequel
La surface (9) active est une surface d'un rouleau (13) de guidage ou d'un rouleau de roulement du dispositif (1) de renvoi.

3. Agencement (1) de rotation suivant la revendication 1, dans lequel
Un rouleau (13) de guidage de l'agencement (1) de rotation est maintenu au moyen d'un axe (25) sur la chaîne de transport ou sur la bande (2) de transport, et
La surface (9) active est à l'extrémité libre de l'axe (25).

4. Agencement (1) de rotation suivant la revendication 1 à 3, dans lequel
Il est prévu au moins deux aimants (3) disposés en dessous de la chaîne de transport ou de la bande (2) de transport,
La première pièce (5) de guidage du flux est disposée entre les au moins deux aimants (3), et
Il est prévu au moins deux deuxièmes pièces (7) de guidage de flux disposées en dessous de la chaîne de transport ou de la bande de transport de manière à obtenir la succession suivante :
deuxième pièce (7) de guidage de flux - aimant (3) - première pièce (5) de guidage de flux - aimant (3) - deuxième pièce (7) de guidage de flux.

5. Agencement (1) de rotation suivant la revendication 4, dans lequel
les au moins deux aimants (3) sont disposés au même niveau et produisent des champs magnétiques de sens respectivement opposés.

6. Agencement (1) de rotation suivant la revendication 5, dans lequel
La première pièce (5) de guidage de flux disposée entre les deux aimants (3) dépasse en hauteur des aimants (3) de manière à ce qu'un premier entrefer (29) entre la première pièce de guidage de flux et l'élément soit plus petit qu'un deuxième entrefer (27) entre les aimants (3) et l'élément (11, 25).

7. Agencement (1) de rotation suivant la revendication 1, dans lequel
l'agencement (1) de rotation est un guidage d'une chaîne de transport tournant sans fin sur une machine d'usinage de pièces en forme de plaque en continu et comprend :
des rouleaux (17) de roulement et des rouleaux (13) de guidage monté sur des maillons (15) de la chaîne,
au moins un rail de guidage disposé sur un bâti de la machine le long au moins d'un tronçon du trajet de circulation de la chaîne de transport, rail qui a deux voies (31) de roulement à distance l'une de l'autre pour les rouleaux (17) de roulement des maillons (15) de la chaîne et entre elles un profil (33) de gorge, dans lequel pénètre les rouleaux (13) de guidage des maillons (15) de la chaîne qui sont montés en saillie des maillons (15) de la chaîne par des axes (25) traversant les rouleaux de guidage, la chaîne de transport étant renvoyée par des roues de chaîne, dont l'une au moins est constituée en roue de chaîne motrice, dans lequel
au moins deux aimants (3) sont disposés au fond du profil (3) de gorge du rail de guidage,
la première pièce (5) de guidage de flux est disposée entre deux aimants (3) et au fond du profil (3) de gorge du rail de guidage,
il est prévu au moins deux deuxièmes pièces (7) de guidage de flux, qui sont disposées au fond du profil (3) de gorge du rail de guidage de manière à obtenir la succession suivante au fond du profil (3) de gorge :
deuxième pièce (7) de guidage de flux - aimant (3) - première pièce (5) de guidage de flux - aimant (3) - deuxième pièce (7) de guidage de flux,
les au moins deux aimants (3) sont disposés au même niveau et
produisent des champs magnétiques respectivement de sens opposés
l'élément est l'axe (25),
la surface (9) efficace est une extrémité libre de l'axe (25), et
l'autre élément comprend les maillons (15) de la chaîne, les rouleaux (17) de roulement et une paroi (19) latérale du profil (33) de gorge.

8. Agencement (1) de rotation suivant la revendication 7, dans lequel les au moins deux aimants (3), la première pièce (5) de guidage de flux et les au moins deux deuxièmes pièces (7) de guidage de flux sont disposés dans une zone d'entrée de la chaîne de transport dans au moins une roue de chaîne, notamment dans la roue motrice.

9. Agencement (1) de rotation suivant la revendication 7 ou 8, dans lequel les au moins deux aimants (3), la première pièce (5) de guidage de flux et les au moins deux deuxièmes pièce (7) de guidage de flux sont disposés dans une zone de sortie de la chaîne de transport constituée d'au moins une roue de chaîne, notamment de la roue motrice.

10. Agencement (1) de rotation suivant l'une des revendications 7 à 9, dans lequel les au moins deux aimants (3), la première pièce (5) de guidage de flux et les au moins deux deuxièmes pièces (7) de guidage de flux sont disposés dans une autre zone du trajet de circulation de la chaîne de transport, le trajet de circulation étant sensiblement rectiligne dans cette autre zone.
